(19) Europäisches Patentamt / European Patent Office / Office européen des brevets

(11) **EP 2 100 161 B1**

(12) **FASCICULE DE BREVET EUROPEEN**

(45) Date de publication et mention
de la délivrance du brevet:
**26.01.2011 Bulletin 2011/04**

(21) Numéro de dépôt: **07857492.8**

(22) Date de dépôt: **12.12.2007**

(51) Int Cl.:
**G01S 13/00** *(2006.01)*

(86) Numéro de dépôt international:
**PCT/EP2007/063830**

(87) Numéro de publication internationale:
**WO 2008/071745 (19.06.2008 Gazette 2008/25)**

(54) **PROCEDE DE TRAITEMENT RADAR PASSIF MULTIVOIES D'UN SIGNAL D'OPPORTUNITE EN FM**

VERFAHREN ZUR MEHRWEGE-PASSIVRADAR-VERARBEITUNG EINES FM-GELEGENHEITSSIGNALS

METHOD FOR THE MULTIPATH PASSIVE RADAR PROCESSING OF AN FM OPPORTUNITY SIGNAL

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **12.12.2006 FR 0610811**

(43) Date de publication de la demande:
**16.09.2009 Bulletin 2009/38**

(73) Titulaire: **THALES**
**92200 Neuilly sur Seine (FR)**

(72) Inventeurs:
• **DE GRAMONT, Emmanuel**
**75017 Paris (FR)**
• **DESODT, Guy**
**91300 Massy (FR)**
• **ALLAM, Sébastien**
**92160 Antony (FR)**

(74) Mandataire: **Lucas, Laurent Jacques**
**Marks & Clerk France**
**Conseils en Propriété Industrielle**
**Immeuble " Visium "**
**22, avenue Aristide Briand**
**94117 Arcueil Cedex (FR)**

(56) Documents cités:
**WO-A-02/091010     FR-A1- 2 882 442**

• **MORABITO A N ET AL: "Improved computational performance for distributed passive radar processing through channelised data - Passive radar systems" IEE PROCEEDINGS: RADAR, SONAR & NAVIGATION, INSTITUTION OF ELECTRICAL ENGINEERS, GB, vol. 152, no. 3, 3 juin 2005 (2005-06-03), pages 179-184, XP006024046 ISSN: 1350-2395**
• **HOWLAND P E ET AL: "FM radio based bistatic radar - Passive radar systems" IEE PROCEEDINGS: RADAR, SONAR & NAVIGATION, INSTITUTION OF ELECTRICAL ENGINEERS, GB, vol. 152, no. 3, 3 juin 2005 (2005-06-03), pages 107-115, XP006024052 ISSN: 1350-2395**
• **KUBICA M ET AL: "Optimum Target Detection using Illuminators of Opportunity" avril 2006 (2006-04), RADAR, 2006 IEEE CONFERENCE ON APRIL 2006, PISCATAWAY, NJ, USA,IEEE, PAGE(S) 417-424 , XP010918470 ISBN: 0-7803-9496-8 abrégé page 1, colonne 1, ligne 1-5 page 1, colonne 2, ligne 14-36 page 2, colonnes 2,3 figures 2,3,5,6,8,9,11,17,20 page 4, colonne 8**

EP 2 100 161 B1

**Description**

**DOMAINE DE L'INVENTION**

La présente invention concerne le domaine des radars passifs, et notamment le domaine des radars passifs fonctionnant sur des émissions d'opportunité non coopérantes, tells que les émissions FM destinées au public. Elle a plus particulièrement trait au traitement des signaux FM réfléchis par des objets situés dans la zone couverte par de telles émissions pour leur utilisation à des fins de détection et de localisation.

**CONTEXTE DE L'INVENTION - ART ANTERIEUR**

Lorsque l'on souhaite réaliser la couverture radar, temporaire ou permanente d'une zone géographique la solution immédiate consiste généralement à implanter des systèmes radars actifs, autonomes, mobile ou non, en nombre tel que la réunion des zones couvertes par chacun des systèmes corresponde à la zone que l'on désire couvrir. Ainsi pour couvrir une zone étendue on peut choisir d'utiliser un nombre donné de radar de faible ou moyenne portée ou un nombre plus restreint de radar de longue portée. La fusion des données fournies par chaque système permet de réaliser la couverture désirée.

S'agissant de systèmes actifs autonomes chacun d'eux comporte un émetteur et un récepteur dont le prix et la complexité sont fonction des performances requises par l'application considérée et en particulier de la puissance émise par l'émetteur, puissance qui conditionne la portée et donc la taille de la zone couverte par chaque système. En outre le déploiement d'une telle structure même sur une zone vaste pose généralement des problèmes de voisinage entre systèmes couvrant des zones voisines au sein d'une même zone géographique globale. Ces problèmes de voisinage peuvent en partie être résolus en utilisant des systèmes fonctionnant suivant des plans de fréquences différents. Néanmoins, le déploiement d'un tel ensemble de systèmes radar autonomes est à la fois complexe et coûteux. Une solution connue pour diminuer la complexité et donc le coût d'une telle structure permettant de couvrir une large zone géographique, consiste à utiliser des systèmes actifs multistatiques comportant un émetteur commun unique placé en un point donné de la zone et délivrant une puissance suffisante pour couvrir cette zone, et un ensemble de récepteurs distants les uns des autres et distants de la source. Dans une telle structure chaque récepteur a généralement connaissance de la position de l'émetteur commun. En outre, dans une telle structure, l'émetteur et les récepteurs sont en général synchronisés. De la sorte le traitement cohérent des signaux reçus mis en oeuvre par chaque récepteur est avantageusement un traitement s'apparentant à un traitement classique de radar bi-statique. Néanmoins une telle structure qui nécessite en particulier de mettre en place un émetteur et des moyens de synchronisation entre l'émetteur et les différents récepteurs reste complexe à mettre en oeuvre surtout dans le cas d'une structure mobile.

Une autre solution pour diminuer la complexité d'une telle structure, consiste à utiliser une structure simplement passive comportant des récepteurs aptes à recevoir des signaux d'opportunité dans une bande de fréquence donnée, bande de fréquence qui correspond de préférence à celle d'équipements émetteurs dont les émissions couvrent totalement ou partiellement la zone géographique que l'on désire couvrir. Ces émetteurs étant destinés à un usage autre que la formation d'une structure de surveillance leurs émissions sont encore appelées émissions d'opportunité ou émissions non coopérantes.

Parmi ces émissions d'opportunité on peut par exemple citer les émissions en modulation de fréquence (émission FM) destinées au grand public qui sont généralement émises par un émetteur local couvrant une zone géographique donnée chaque émission étant réalisée sur une bande de fréquence, ou canal FM, d'une centaine de kilohertz à deux cents kilohertz.

Cette solution basée sur la mise en place d'une structure passive, sans émetteur, présente le grand avantage de limiter la complexité et donc le coût de cette structure. Son déploiement tactique se résume à la dissémination sur la zone à surveiller d'un ou plusieurs récepteurs radars effectuant la réception et le traitement des signaux d'opportunité reçus. En revanche la mise en oeuvre pratique de cette solution purement passive se heurte à un certain nombre de difficultés qui expliquent qu'elle soit encore peu exploitée.

Une première difficulté qui apparaît lorsque l'on veut mettre en oeuvre une telle structure réside dans la complexité du signal reçu. En effet le signal reçu par chaque récepteur correspond à la fois à la réception directe du signal émis par la source d'opportunité (émetteur FM), à la réception des réflexions de ce signal d'opportunité sur des obstacles fixes variés, ces signaux pouvant être assimilés à ce que l'homme du métier connaît sous la dénomination de fouillis (ou "clutter" selon la dénomination anglo-saxonne), et à la réception des signaux "utiles" provenant des réflexions de cette même source par les objets mobiles que l'on cherche à détecter. La complexité du signal reçu est en outre encore aggravée par la réception de signaux parasites pouvant par exemple provenir d'autres émetteurs, distants, émettant dans la même bande de fréquence. En outre les signaux utiles (i.e. ceux rétrodiffusés par les cibles mobiles) présentent généralement un niveau très sensiblement inférieur à la réception directe, sensiblement inférieur à celui des réflexions sur obstacles fixes et sensiblement inférieur à celui du bruit thermique.

Une autre difficulté liée à la mise en oeuvre d'une telle structure réside dans le fait que l'émission d'opportunité correspond à un signal inconnu dont les propriétés ne sont pas maîtrisées (largeur de bande, niveau des lobes secondaires en distance et en doppler...). De sorte que, le signal émis par la source d'opportunité doit être identifié comme tel et isolé des autres signaux reçus par le récepteur radar pour servir de référence lors des calculs de corrélation et pour permettre l'élimination des détections parasites correspondant à des lobes secondaires en doppler et en distance.

Le document FR2882442 décrit un procédé de traitements du signal reçu par un radar passif FM comportant une pluralité de voies de reception.

## PRESENTATION DE L'INVENTION

Un but de l'invention est de proposer une solution permettant de mettre en oeuvre une structure de surveillance passive composée d'un ou plusieurs systèmes radar passifs dispersés sur la zone géographique à couvrir, solution qui permet ainsi de résoudre les difficultés citées précédemment.

A cet effet, l'invention a pour objet un procédé de traitements du signal reçu par un radar passif FM comportant une pluralité de voies de réception ($V_1$, ..., $V_N$), le procédé comportant une phase de traitement cohérent réalisant un re-conditionnement des signaux reçus puis une phase de traitement non cohérent réalisant la constitution de plots à partir des signaux issus du traitement cohérent.

Selon l'invention le traitement cohérent comporte:

- une étape de formation de voies cibles dépolluées
- une étape de régénération du signal de référence
- une étape de calcul des ambiguïtés croisées entre voies cibles dépolluées et signal de référence régénéré.
- une étape de calcul de l'auto-ambiguité du signal de référence régénéré.

Selon un mode de mise en oeuvre préféré du procédé selon l'invention le traitement non cohérent comporte en outre:

- une étape d'extraction distance-doppler appliquée aux PE crées à l'issue de l'étape de normalisation et de recherche de des détections pour constituer des plots,
- une étape d'épuration doppler-distance appliquée aux plots constitués après extraction distance-doppler et réalisée au moyen du signal résultant de l'étape de calcul de l'auto-ambiguïté du signal de référence régénéré, la détermination des attributs des plots étant finalement réalisée à partir des plots obtenus après l'étape d'épuration doppler-distance.

Selon ce mode de mise en oeuvre préféré, l'étape d'extraction distance-doppler utilise le calcul de la bande à -3dB du signal de référence régénéré.

Selon ce mode de mise en oeuvre préféré, la bande à -3dB du signal de référence régénéré est estimée à partir du signal résultant de l'étape de calcul de l'autoambiguité du signal de référence régénéré.

Selon un mode de mise en oeuvre préféré, le traitement non cohérent comporte en outre:

- une étape de mesures d'écartométrie en distance,
- une étape de mesures d'écartométrie en azimut,

ces deux étapes étant appliquées aux plots constitués à l'issue de l'étape d'épuration doppler-distance.

Selon ce mode de mise en oeuvre le traitement non cohérent comporte également une étape d'épuration en azimut et une étape de limitation du nombre de plots transmis.

## DESCRIPTION DES FIGURES

Les caractéristiques et avantages de l'invention seront mieux appréciés grâce à la description qui suit, description qui expose l'invention au travers d'un mode de réalisation particulier pris comme exemple non limitatif et qui s'appuie sur les figures annexées, figures qui représentent:

- la figure 1, un schéma synoptique de l'ensemble des étapes du traitement selon l'invention,
- les figures 2 à 3, des illustrations schématiques du principe de fonctionnement de l'étape de formation de voies de réception dépolluées,
- la figure 4, une illustration schématique du principe de fonctionnement de l'étape de régénération du signal de référence,

- la figure 5, une illustration schématique du principe de fonctionnement de l'étape de calcul des ambiguïtés croisées signal de référence/voies cibles dépolluées,
- les figures 6 et 7, des illustrations schématiques du principe de fonctionnement de l'étape d'extraction des plots,
- la figure 8, une illustration schématique du principe de fonctionnement de l'étape d'épuration distance-doppler.

## DESCRIPTION DETAILLEE

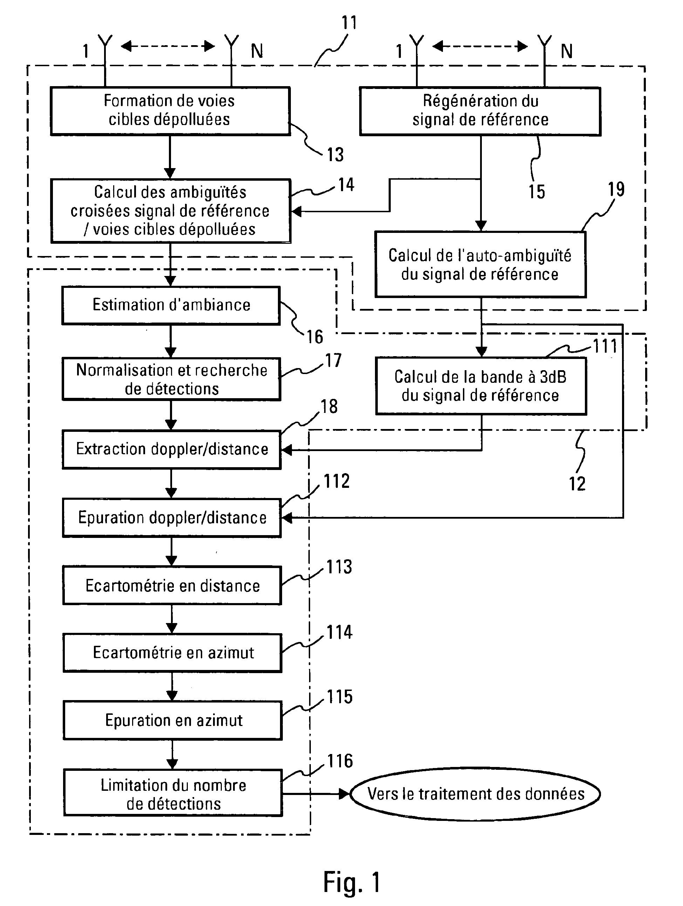

On s'intéresse tout d'abord à la figure 1, qui présente le synoptique schématique type d'un procédé de traitement du signal mettant en oeuvre l'invention. Le procédé selon l'invention est ici présenté dans son application non limitative à un radar passif comportant une pluralité de voies de réception indépendantes. Pour faciliter la compréhension de l'invention, le procédé est d'abord présenté de manière générale avec l'ensemble de ses étapes de traitement. Les étapes encadrées en gras, spécifiques de l'invention, sont détaillées dans la suite du document. Les autres étapes mettant en oeuvre des procédés connus sont simplement mentionnées pour faciliter la description du procédé qui combine l'ensemble de ces étapes.

Comme l'illustre la figure 1, le procédé selon l'invention met en oeuvre deux types de traitements, un premier type de traitement 11, qualifié de manière connue pour l'homme du métier de traitement cohérent qui procède à un re-conditionnement des signaux reçus par le radar, suivi d'un second type de traitement 12 qualifié de traitement non cohérent réalisant la constitution de plots à partir des signaux issus du traitement cohérent. On parle ici de traitement cohérent pour toutes les étapes de traitement pour lesquelles les signaux sont traités à la fois en amplitude et en phase. Inversement on parle de traitement non cohérent lorsque la phase du signal n'est plus prise en compte dans le traitement réalisé sur le signal.

Selon l'invention, le traitement cohérent 11 comporte principalement deux étapes, une première étape 13 dite "de formation de voies cibles dépolluées", et une deuxième étape 14 d'intégration cohérente par calcul des ambiguïtés croisées entre le signal reçu sur chaque voie "dépolluée" et un signal de référence correspondant au signal émis par la source d'opportunité.

La première étape 13, du traitement cohérent 11 est dite "de formation de voies de réception dépolluées", car elle a pour objectif de minimiser sur les voies cibles, voies utilisées de manière connue pour la recherche des détections ou encore des "présences écho", la puissance des sources de nuisance susceptibles de limiter la sensibilité du radar. Dans le cas d'un radar passif, de telles sources de nuisances peuvent provenir:

- du signal de relativement fort niveau par rapport aux signaux utiles et provenant en trajet direct de l'émetteur de référence, c'est à dire de la source d'opportunité. Selon l'invention, ce signal direct, par ailleurs utilisé pour réaliser l'étape d'intégration cohérente comme signal de référence, constitue par son niveau une nuisance importante pour la réception des signaux utiles dont le niveau est généralement bien plus faible,
- des réflexions multiples du signal émis par la source sur des obstacles naturels fixes (multi trajets de l'émetteur de référence),
- d'autres émetteurs FM travaillant, au moins partiellement, dans la même bande que l'émetteur de référence et dont le signal parvient jusqu'aux récepteurs du radar considéré,
- des sources de pollution radioélectrique de nature diverse.

Pour un système comportant plusieurs voies d'acquisition (système multi-capteurs), comme c'est le cas pour un radar passif fonctionnant sur des émissions FM d'opportunité, l'élimination des sources de nuisance peut être réalisée dans le domaine spatial, par « traitement d'antenne » de type "Formation de Faisceau par le Calcul Adaptative" (FFC Adaptative) ou de type "Opposition dans les Lobes Secondaires" (OLS) qui sont des types de traitement bien connus de l'homme du métier. Ces traitements constituent les solutions usuellement retenues pour les radars actifs travaillant dans les bandes de fréquence élevées habituellement utilisées pour ces radars.

L'élimination des sources de nuisance peut également être réalisée conjointement dans les domaines temporel et spatial. On parle alors de traitement spatio-temporel. C'est cette deuxième alternative qui est celle mise en oeuvre dans le procédé selon l'invention.

Selon l'invention, l'algorithme utilisé est un algorithme de type spatio-temporel avec contrainte directionnelle, traitement désigné sous le terme de Formation Adaptative Spatio-Temporelle (FAST). Ce type d'algorithme permet avantageusement de minimiser le nombre (les multi-trajets peuvent être éliminés sur l'axe temporel) et l'étendue (grâce à l'utilisation de la contrainte directionnelle) des zones angulaires aveugles apparaissant dans la direction des brouilleurs. Le terme "brouilleur" est ici entendu au sens général de "perturbation".

Il est à noter que les formes d'ondes FM n'étant pas pas séparables en distance et en doppler, l'élimination des trajets multiples ne peut se faire, comme il est d'usage pour les radars actifs, par application d'un filtre connu de l'homme de métier sous la dénomination VCM (Visualisation des Cibles Mobiles).

La deuxième étape 14 du traitement cohérent 11 consiste à caractériser en distance et en doppler les échantillons de signal reçu, par intégration cohérente du signal reçu sur une durée donnée.

Selon l'invention, les signaux réfléchis par les cibles étant des versions retardées et dopplérisées du signal de référence, l'intégration cohérente des échantillons de signal reçu peut être réalisée en déterminant la fonction d'ambiguïté croisée définie pour un décalage temporel m, compris entre 0 et D et un décalage doppler bistatique n compris entre 0 et M-1 par:

$$\text{amb}_{(m,n)} = \sum_{k=0}^{M-1} v_{\text{réf}}[k]v_{\text{cibledep}}^{*}[k+m]e^{\frac{j2\pi nk}{M}} \qquad [1]$$

relation pour laquelle:

- M représente le nombre d'échantillons temporels intégrés en cohérence,
- D représente le nombre maximum de décalages temporels testés,
- $v_{\text{réf}}[k]$, $0 \leq k \leq M-1$, le signal de référence,
- $V_{\text{cible dep}}[k]$, $0 \leq k \leq M-1 + D$, une voie cible dépolluée du trajet direct.

Cette deuxième étape est réalisée pour chacune des voies dépolluées obtenues à l'étape précédente en utilisant le signal de référence (référence d'amplitude et de phase) obtenu après mise en oeuvre de l'étape 15 de régénération. Le traitement de re-génération du signal de référence vise à obtenir ce signal de référence dépollué des multi-trajets et des autres sources potentielles de nuisance. En effet:

- la présence de multi-trajets de fort niveau dans le signal de référence pourrait entraîner une désensibilisation sur l'axe distance,
- la présence de résidus de signaux indésirables dans le signal de référence pourrait, dans des conditions de fonctionnement "sévères", pour lesquelles le niveau de la source de nuisance pourrait par exemple être "proche" de celui du trajet direct, entraîner une désensibilisation du radar. Cette étape 15 de régénération permet ainsi avantageusement d'obtenir un signal de référence dépollué.

Selon l'invention toujours le traitement non cohérent 12 effectue de manière classique une étape 16 d'estimation d'ambiance et une étape 17 de normalisation-détection, étapes permettant la création de présence échos ou PE.. La mise en oeuvre de ces étapes 16 et 17est réalisée de manière connue et n'est pas détaillée ici.

Selon l'invention, elle comporte également, de manière caractéristique, une étape 18 d'extraction distance doppler dont le rôle est en particulier de déterminer parmi les "présences écho" obtenues à l'issue de l'étape 17 celles qui peuvent être considérées comme relatives à un même écho associé à un même objet. En effet, il est connu qu'une cible, en particulier si elle réfléchit un signal de fort niveau, peut donner lieu à la création de plusieurs informations de présence écho pour des positions correspondant à des cases distance-doppler adjacentes à celle correspondant à la position vraie de la cible. L'objectif de l'extraction distance-doppler est par suite de créer une unique détection, appelée plot, à partir des présences écho adjacentes provenant d'une même cible.

Selon l'invention, l'opération d'extraction de plots est en outre suivie d'une étape 112 d'épuration distance-doppler dont le rôle consiste à traiter les cibles retenues après extraction et dont le niveau est élevé. En effet de telles cibles présentent généralement des lobes secondaires en doppler et en distance qui peuvent également, du fait de leur niveau, être détectés et considérés comme des cibles à part entière distinctes de la cible réelle. Le rôle de l'épuration distance-doppler est de supprimer ces détections parasites.

Le traitement non cohérent 12 effectue également les opérations classiques d'écartométrie en distance et d'écartométrie en azimut de façon à caractériser chaque plot extrait par sa position en distance et sa position angulaire. Ces opérations réalisées respectivement durant les étapes 113 et 114 sont complétées par une étape 115 d'épuration en azimut. Le rôle de l'épuration en azimut est de ne conserver qu'un plot lorsqu'une une même cible crée des détections dans plusieurs faisceaux angulaires.

Les plots restants sont enfin l'objet d'une étape de limitation de charge 116 destinée à éviter la saturation de la chaîne de traitement de données en aval.

Afin que tout l'intérêt du procédé selon l'invention soit bien saisi par l'homme du métier, on présente de manière plus détaillée dans la suite de la description les étapes caractéristiques qui rendent ce procédé particulièrement apte à traiter les signaux reçus par un radar passif FM et en particulier un radar passif fonctionnant sur des émissions FM grand public.

On s'intéresse dans un premier temps au traitement cohérent 11 et plus particulièrement aux étapes suivantes:

- Formation des voies cible dépolluées (étape 13),
- Régénération du signal de référence (étape 15),
- Calcul des ambiguïtés croisées signal de référence / voies cibles dépolluées (étape 14),
- Calcul de l'autoambiguïté du signal de référence (étape 19).

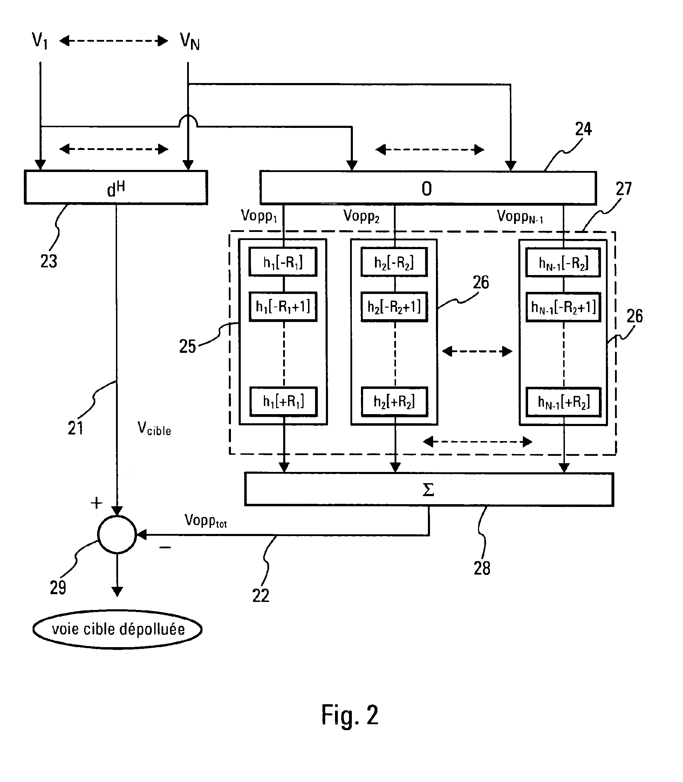

On considère à présent les figures 2, 3 et 4, qui illustrent le principe de fonctionnement de l'étape 13 de formation des voies cibles dépolluées.

En fonctionnement, le récepteur d'un radar passif reçoit un signal direct, de très fort niveau provenant de la source. Il reçoit également des signaux provenant de réflexions sur des obstacles fixes du signal émis par la source, réflexions encore appelés multi-trajets, et, éventuellement, d'autres signaux nuisibles qui peuvent par exemple provenir d'autres sources d'émission FM ou encore de sources diverses de pollution radioélectriques. Ces signaux, bien que faibles devant le signal de trajet direct ont une puissance suffisante pour dégrader la sensibilité du radar. C'est pourquoi il est également nécessaire de les supprimer. C'est le rôle de l'étape 13 du procédé.

Le principe de l'étape 13 selon l'invention consiste principalement à retrancher du signal vcible 21 obtenu à partir des différentes voies de réception $V_1$ à $V_N$, un signal $vopp_{tot}$ 22 représentant le plus précisément possible les signaux indésirables accompagnant le signal utile. Ce signal $vopp_{tot}$ est obtenu au moyen d'un procédé de filtrage adaptatif appliqué aux signaux $Vopp_1$, à $vopp_{N-1}$ situés dans un sous-espace orthogonal à la direction d'observation considérée.

L'étape 13 met ainsi en oeuvre, sous une forme indirecte connue sous l'appellation anglo-saxonne de "Generalized Sidelobe Cancelor" (GSC), un traitement de type FAST à contrainte directionnelle. L'utilisation d'une forme indirecte de type GSC permet, dans une forme de mise en oeuvre préférée, d'utiliser des filtres de longueur différente sur les différentes voies opposition et, par conséquent, de limiter la charge de calcul.

L'étape 13 est typiquement mise en oeuvre en utilisant :

- 1 filtre temporel 25 "long" permettant d'optimiser l'élimination du signal de trajet direct et de ses multi-trajets lointains,
- N-2 filtres temporels 26 "plus courts" permettant l'élimination d'autres sources de nuisance dont la puissance moindre ne nécessite pas d'utiliser des filtres temporels longs.

Comme l'illustre la figure 2, l'étape 13 de formation de voies cibles dépolluées met en oeuvre les opérations suivantes

- une opération 23 de détermination du signal vcible dans la direction d'observation considérée,
- une opération 24 de détermination des signaux $vopp_1$ à $vopp_{N-1}$ à partir des signaux fournis par les voies de réception et de la matrice O,
- une opération 27 de filtrage des signaux $vopp_1$ à $vopp_{N-1}$ au moyen des filtres oppositions $h_1[k]$ à $h_{N-1}[k]$,
- Une opération 28 de sommation des signaux $vopp_1$ à $vopp_{N-1}$ filtrés pour obtenir le signal $vopp_{tot}$ destiné à être retranché du signal vcible,
- une opération 29 de soustraction proprement dite du signal $vopp_{tot}$ au signal vcible pour former le signal cible dépollué.

En ce qui concerne l'opération 23 de calcul du signal vcible 21, celle-ci est réalisée en considérant:

- d'une part le vecteur v(k) des signaux reçus sur les N voies réceptions :

$$v(k) = \begin{vmatrix} v_1(k) \\ \vdots \\ v_N(k) \end{vmatrix} \text{ avec k variant de 1 à N} \qquad [2],$$

- d'autre part la direction d'observation considérée: $\theta_{obs}$,

- d'autre part encore les valeurs $d_i(\theta_{obs})$, des diagrammes de rayonnement des N antennes correspondant aux N voies de réception dans la direction $\theta_{obs}$ (i variant de 1 à N).

Selon l'invention, le signal vcible est obtenu en réalisant le produit du vecteur v représentant le signal v reçu par un vecteur d tel que le résultat du produit maximise le rapport signal à bruit (RSB) de la voie cible sur bruit blanc, sous contrainte de :

- focalisation des signaux provenant de la direction $\theta_{obs}$,
- non-distorsion des signaux provenant de la direction $\theta_{obs}$,

Le vecteur d est donc le vecteur directeur associé à la direction d'observation $\theta_{obs}$ et on peut ainsi écrire, selon l'invention:

$$vcible(k) = d^H \, v(k) \qquad\qquad [3]$$

où $d^H$ représente le vecteur trans-conjugué du vecteur d dont l'expression est donnée par :

$$d = \begin{pmatrix} d_1(\theta_{obs}) \\ d_2(\theta_{obs}) \\ \vdots \\ d_N(\theta_{obs}) \end{pmatrix} \qquad\qquad [4]$$

L'opération objet du calcul 24 de détermination des signaux $vopp_1$ à $vopp_N$ consiste à appliquer une matrice O aux signaux $V_1$ à $V_N$ reçus pour obtenir des signaux $V_{opp}(k)$ ayant pour caractéristique d'être orthogonaux à la contrainte d.

Selon l'invention, la matrice O est ainsi une matrice purement spatiale de dimension (N-1,N) vérifiant les relations suivantes :

$$O \cdot d = 0 \qquad\qquad [5],$$

et

$$rang(O) = N - 1 \qquad\qquad [6]$$

Toute matrice O qui satisfait les relations [5] et [6] est utilisable pour l'étape 13. Une méthode de construction préférée d'une telle matrice O est décrite ci-après.

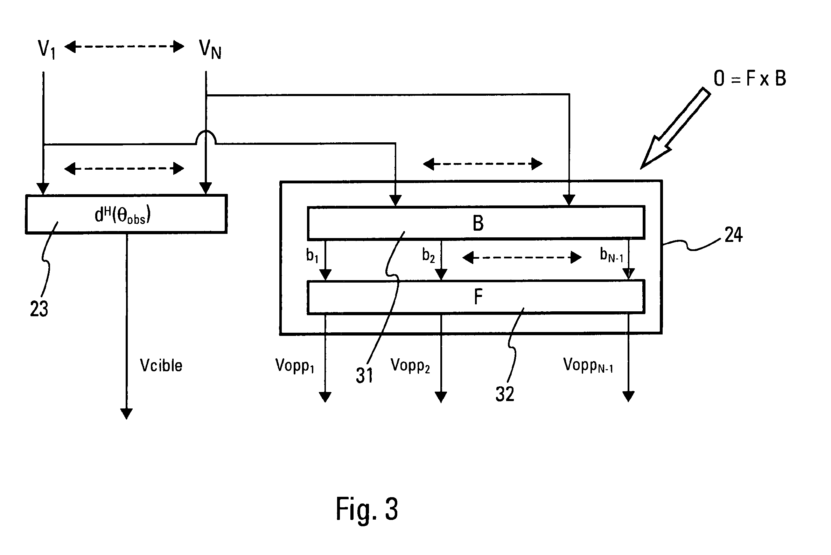

Le calcul 24 des signaux $v_{opp}(k)$ à partir de la matrice O est effectué en deux opérations 31 et 32 illustrées sur la figure 3.

La première opération, 31, consiste à appliquer aux signaux $v_i$ à $v_N$, une matrice B de rang N-1 vérifiant l'égalité: $B \cdot d = 0$. Cette matrice est définie comme la matrice de dimension (N-1,N), constituée des N-1 premières lignes du projeteur orthogonal P sur $d^\perp$ défini par la relation suivante:

$$P = I_{N,N} - \frac{dd^H}{d^H d} \qquad\qquad [7]$$

où $I_{N,N}$ représente la matrice identité de dimension (N,N).

La matrice B de dimension (N-1,N) vérifie la relation: $B \cdot d = 0$.

L'application de la matrice B aux composantes $v_i(k)$ (i variant de 1 à N) du signal reçu fourni un ensemble de N-1 signaux $b_i(k)$ orthogonaux à la contrainte d.

La seconde opération, 32, consiste à appliquer aux signaux $b_i$ issus de l'opération précédente une matrice F de dimension (N-1,N-1) de façon à ce que le signal vopp résultant présente pour sa composante $vopp_1$, qui correspond à la voie sur laquelle est appliqué le filtre temporel le plus long, une maximisation du rapport de la puissance du signal de référence à la puissance du bruit thermique. Cette matrice F est définie par la relation suivante:

$$F = \begin{vmatrix} & W^H_{\text{réf}} \\ 0 & I_{N-2,N-2} \end{vmatrix} \tag{8}$$

dans laquelle $I_{N-2,N-2}$ représente la matrice identité de dimension (N-2,N-2).

$W^H_{\text{réf}}$ représente ici le trans-conjugué du vecteur $W_{\text{réf}}$ défini par la relation suivante:

$$w_{\text{réf}} = R_b^{-1} \cdot B \cdot d_{\text{réf}} \tag{9}$$

où $R_b$ représente la matrice de covariance du bruit thermique au niveau des signaux $b_i$ et $d_{\text{réf}}$ le vecteur directeur du signal de référence au niveau des N voies de réception, vecteur ayant pour expression:

$$d_{\text{réf}} = \begin{pmatrix} d_1(\theta_{\text{réf}}) \\ d_2(\theta_{\text{réf}}) \\ \vdots \\ d_N(\theta_{\text{réf}}) \end{pmatrix} \tag{10}$$

Le vecteur $w_{\text{réf}}$ constitue le vecteur des pondérations spatiales à appliquer aux signaux $b_i$ pour maximiser le rapport de la puissance du trajet de référence sur la puissance de bruit thermique sur la voie $vopp_1$.

Il est à noter en outre que si l'on appelle R la matrice de covariance du bruit thermique pris sur les N voies de réception on peut écrire:

$$R_b = B \cdot R \cdot B^H \tag{11}$$

Le bruit thermique étant supposé spatialement blanc sur les N voies de réception, on a: $R = I_{N,N}$ et par suite: $R_b = B \cdot B^H$. Le vecteur $W_{\text{réf}}$ a alors pour expression:

$$w_{\text{réf}} = (B \cdot B^H)^{-1} \cdot B \cdot d_{\text{réf}} \tag{12}$$

Par suite, la matrice O se définit donc comme le produit: $O = F \cdot B$.

Comme cela a déjà été dit précédemment le rôle principal de l'étape 13 consiste dans l'élaboration du signal $vopp_{tot}$ qui est soustrait du signal vcible. Selon l'invention le signal $vopp_{tot}$ est réalisé par filtrage à partir des signaux $vopp_1$ à $vopp_{N-1}$ Le filtrage mis en oeuvre est de type adaptatif et a pour objet d'obtenir un signal $vopp_{tot}$ permettant d'éliminer au mieux les composantes de signal indésirables. Sa réalisation se traduit en pratique par l'application sur chaque signal $vopp_1$ à $vopp_{N-1}$ d'un filtre temporel dont les coefficients sont recalculés périodiquement dans le seul but de produire à chaque instant le signal $vopp_{tot}$ souhaité. Le principe de calcul des différents coefficients du filtre appliqué à chaque signal $vopp_i$ (i variant de 1 à N-1) est présenté dans la suite de la description.

Pour effectuer ce calcul on forme tout d'abord les deux vecteurs suivants:

- vopp(k) vecteur des valeurs des signaux d'opposition, composé d'échantillons temporels des signaux $vopp_i$ (i variant de 1 à N-1) pris en différents instants successifs autour de l'instant k,
- h vecteur des coefficients des filtres appliqués aux signaux $vopp_i$,

On appelle par ailleurs vcible(k) la valeur du signal vcible pour l'instant k (échantillon temporel k) considéré. ces deux vecteurs ont respectivement pour expression:

$$- \text{vopp}(k) = \begin{pmatrix} v_{opp,1}(k+R_1) \\ \vdots \\ v_{opp,1}(k-R_1) \\ v_{opp,2}(k+R_2) \\ \vdots \\ v_{opp,2}(k-R_2) \\ \vdots \\ v_{opp,N-1}(k+R_2) \\ \vdots \\ v_{opp,N-1}(k-R_2) \end{pmatrix}$$

$$- h = \begin{pmatrix} h_1(-R_1) \\ \vdots \\ h_1(R_1) \\ h_2(-R_2) \\ \vdots \\ h_2(R_2) \\ \vdots \\ h_{N-1}(-R_2) \\ \vdots \\ h_{N-1}(R_2) \end{pmatrix}$$

où $R_1$ représente le retard du filtre opposition appliqué au signal $\text{vopp}_1$ la longueur $L_1$ du filtre, c'est à dire le nombre de coefficients, étant égale à $2R_1+1$, et où $R_2$ représente le retard des filtres oppositions appliqué aux signaux $\text{vopp}_2$ à $\text{vopp}_{N-1}$, la longueur $L_2$ des filtres étant égale à $2R_2+1$.

Le signal $\text{vcible}_{dep}$ correspondant à la voie cible dépolluée a par suite pour expression:

$$\text{vcible}_{dep}(k) = \text{vcible}(k) - h^H \cdot \text{vopp}(k) \qquad [13]$$

Selon l'invention le vecteur h est calculé de façon à minimiser la fonction coût J définie sur K échantillons de signal par la relation suivante:

$$J = \sum_{k=1}^{K} \left| v_{cible}(k) - h^H \cdot v_{opp}(k) \right|^2 \qquad [14]$$

Le filtre h minimisant le critère J, est alors défini par la relation suivante:

$$h = \Gamma_{vopp,vopp}^{-1} \cdot \Gamma_{vopp,vcible} \qquad [15]$$

où $\Gamma_{vopp,vopp}$ représente la matrice définie par la relation suivante:

$$\Gamma_{vopp,vopp} = \sum_{k=1}^{K} vopp(k) \cdot vopp(k)^{H} \qquad [16]$$

et où $\Gamma_{vopp,vcible}$ représente le vecteur défini par la relation suivante:

$$\Gamma_{vopp,vcible} = \sum_{k=1}^{K} vopp(k) \cdot vcible(k)^{H} \qquad [17]$$

Selon l'invention, la solution retenue pour le calcul de h est donc du type algorithme des moindres carrés déterministes en version bloc.

Il est en à noter qu'afin d'en améliorer le conditionnement, critique à la fois sur l'axe spatial et sur l'axe temporel en raison du fort niveau de réjection des filtres récepteurs en limite de bande, la matrice $\Gamma_{vopp,vopp}$ est surchargée préalablement au calcul du vecteur h selon un principe bien connu de l'homme du métier.

Pour optimiser les performances de la formation des voies dépolluées, le calcul du vecteur h peut être mis à jour sur des blocs de données se recouvrant partiellement.

Le calcul brut des termes de la matrice $\Gamma_{vopp,vopp}$ nécessite d'estimer séparément un nombre $N_T$ de termes égal à $(L_1 + (N-2)L_2)(L_1 + (N-2)L_2+1)/2$, nombre qui correspond aux termes situés dans la partie triangulaire supérieure de la matrice hermitienne $\Gamma_{vopp,vopp}$. La charge de calcul nécessaire à un tel calcul est conséquente et c'est pourquoi, dans une forme de mise en oeuvre préférée, le procédé selon l'invention réalise ce calcul en tirant profit de la structure particulière de la matrice $\Gamma_{vopp,vopp}$. En effet, La matrice hermitienne $\Gamma_{vopp,vopp}$ peut s'écrire sous la forme suivante:

$$\Gamma_{vopp,vopp} = \begin{vmatrix} \Gamma_{vopp_1,vopp_1} & \Gamma_{vopp_1,vopp_2} & \cdots & \Gamma_{vopp_1,vopp_{N-1}} \\ \Gamma_{vopp_1,vopp_2}^{H} & \Gamma_{vopp_2,vopp_2} & \ddots & \vdots \\ \vdots & \ddots & \ddots & \Gamma_{vopp_{N-2},vopp_{N-1}} \\ \Gamma_{vopp_1,vopp_{N-1}}^{H} & \cdots & \Gamma_{vopp_{N-2},vopp_{N-1}}^{H} & \Gamma_{vopp_{N-1},vopp_{N-1}} \end{vmatrix} \qquad [18]$$

chacune des sous-matrices hermitiennes $\Gamma_{voppi,voppi}$ de la matrice $\Gamma_{vopp,vopp}$ ayant en outre la structure suivante :

$$\Gamma_{vopp_i,vopp_i} = \begin{vmatrix} \sum_{k=1}^{K} vopp_i(k+R_i) \cdot vopp_i^{*}(k+R_i) & \sum_{k=1}^{K} vopp_i(k+R_i) \cdot vopp_i^{*}(k+R_i-1) & \cdots & \sum_{k=1}^{K} vopp_i(k+R_i) \cdot vopp_i^{*}(k-R_i+1) \\ (\sum_{k=1}^{K} vopp_i(k+R_i) \cdot vopp_i^{*}(k+R_i-1))^{*} & \sum_{k=0}^{K-1} vopp_i(k+R_i) \cdot vopp_i^{*}(k+R_i) & \ddots & \vdots \\ \vdots & \ddots & \ddots & \vdots \\ (\sum_{k=1}^{K} vopp_i(k+R_i) \cdot vopp_i^{*}(k-R_i+1))^{*} & \cdots & \cdots & \sum_{k=1-L_i+1}^{K-L_i+1} vopp_i(k+R_i) \cdot vopp_i^{*}(k+R_i) \end{vmatrix} \qquad [19]$$

De la sorte, pour toute ligne m et pour toute colonne n de la matrice $\Gamma_{voppi,voppi}$ on peut écrire, pour $m \leq n$ :

$$\Gamma_{vopp_i,vopp_i}(m,n) = \sum_{k=1}^{K} vopp_i(k+R_i+1-m) \cdot vopp_i^{*}(k+R_i+1-n) \qquad [20]$$

ou encore:

$$\Gamma_{vopp_i,vopp_i}(m,n) = \sum_{k=2-m}^{K-m+1} vopp_i(k+R_i) \cdot vopp_i^{*}(k+R_i+(m-n)) \qquad [21]$$

ou encore:

$$\Gamma_{vopp_i,vopp_i}(m,n) = \overbrace{\sum_{k=2-m}^{0} vopp_i(k+R_i) \cdot vopp_i^{*}(k+R_i+(m-n))}^{(1)} +$$

$$\overbrace{\sum_{k=1}^{K-L_i+1} vopp_i(k+R_i) \cdot vopp_i^{*}(k+R_i+(m-n))}^{(2)} +$$

$$\overbrace{\sum_{k=K-L_i+2}^{K-m+1} vopp_i(k+R_i) \cdot vopp_i^{*}(k+R_i+(m-n))}^{(3)}. \qquad [22]$$

En consultant la relation [22], on constate que les termes (1), (2) et (3) constituent, respectivement, les sommes de (m-1), (K-$L_i$) et ($L_i$-m) produits. On constate en outre que le terme (2) ne dépend que de la différence (m-n), et qu'il n'a donc à être calculé qu'une fois pour tous les termes de $\Gamma_{voppi,voppi}$ situés sur une même sous-diagonale. On constate enfin que la charge de calcul consécutive aux calculs des termes (1) et (3) est négligeable dans la mesure où K- $L_i$ >> $L_i$-1.

De la sorte, l'estimation des sous-matrices $\Gamma_{voppi,voppi}$ est donc assimilable, au premier ordre, en terme de charge de calcul, au calcul de $L_i$ valeurs (les $L_i$ valeurs du terme (2)), alors que dans un calcul brut elle correspond au calcul de $L_i$ ($L_i$ + 1)/2 valeurs, ces valeurs correspondant au nombre de termes situés dans la partie triangulaire supérieur de la matrice hermitienne $\Gamma_{voppi,voppi}$.

En procédant de façon analogue, il est possible de calculer à moindre coût les termes des sous-matrices $\Gamma_{voppi,voppj}$ (avec i≠j) qui sont situés sur une même sous-diagonale.

Le calcul du terme (2) pour chaque sous-diagonale constitue donc la plus grande part de la charge de calcul. Il consiste pour une matrice de type $\Gamma_{voppi,voppi}$ à évaluer le terme C(m-n) défini pour les paramètres m (numéro de ligne) et n (numéro de colonne) par la relation suivante:

$$C(m-n) = \sum_{k=1}^{K-L_i+1} vopp_i(k+R_i) \cdot vopp_i^{*}(k+R_i+(m-n)) \qquad [23]$$

avec:

- $m \leq n$,
- $1 \leq m \leq L_i$,
- $1 \leq n \leq L_i$.

Pour des valeurs de $L_i$ suffisamment importantes il est avantageux, en termes de charge de calcul, d'effectuer l'estimation des termes $C(m-n)$ dans le domaine spectral. Pour ce faire on définit les grandeurs suivantes:

- $N = K-L_i+1$,
- $D = N+ L_i-1$,
- $vopp_{synch}(k) = vopp_i(k + R_i +1)$ pour $k = 0,..., N-1$
- $vopp_{comp}(k) = vopp_i(k - R_i +1)$ pour $k = 0,..., D-1$

Ensuite, à partir de $vopp_{synch}(k)$ et $vopp_{comp}(k)$ on construit par "0 padding" les séquences $vopp_{synchpad}(k)$ et $vopp_{comppad}(k)$ de longueur S, S étant la plus petite puissance de 2 supérieure ou égale à $N+2(L_i-1)$. Puis on calcule $VFopp_{synch}(l)$ et $VFopp_{comp}(l)$ qui sont respectivement les résultats des transformées de Fourier rapides de $vopp_{compad}(k)$ et $vopp_{synchpad}(k)$.

On déduit de $VFopp_{synch}$ et $VFopp_{comp}$ le signal temporel $p(k)$ défini, pour $0 \leq k \leq S-1$, par :

$$p(k) = FFT^{-1} (VFopp_{synch}(l) \; VFopp_{comp}^{*}(l)),$$

Par suite, pour chaque couple $(m,n)$ tel que l'on a:

- $1 \leq m \leq L_i$,
- $1 \leq n \leq L_i$,
- $m \leq n$,

on peut écrire:

$$C(m\text{-}n) = \sum_{k=1}^{N} vopp_i(k + R_i)vopp_i^{*}(k + R_i + (m-n))$$

$$= p(S\text{-}L_i+1\text{-}(m\text{-}n)) \text{ pour } m\text{-}n \neq 1\text{-}L_i,$$

$$= p(0) \qquad \text{ pour } m\text{-}n = 1\text{-}L_i,$$

En pratique, Pour maximiser la réduction de charge apportée par le calcul dans le domaine spectral, l'estimation des valeurs des signaux $p(k)$ est effectuée sur plusieurs sous-blocs temporels contigus de façon à utiliser des FFT de taille réduite. Les valeurs de $C(m-n)$ sont alors obtenues en sommant les valeurs des signaux $p(k)$ calculées sur les différents sous-blocs.

Ce principe de passage dans le domaine spectral, décrit précédemment, peut évidemment être également utilisé pour réduire la charge de calcul induite par le calcul des termes du type $C(m-n)$ des matrices $\Gamma_{voppi,vopprj}$ avec $i \neq j$, pour autant bien entendu que les longueurs $L_i$ des filtres le justifient. Il peut également être utilisé pour effectuer le calcul du vecteur $\Gamma_{vopp,vcible}$.

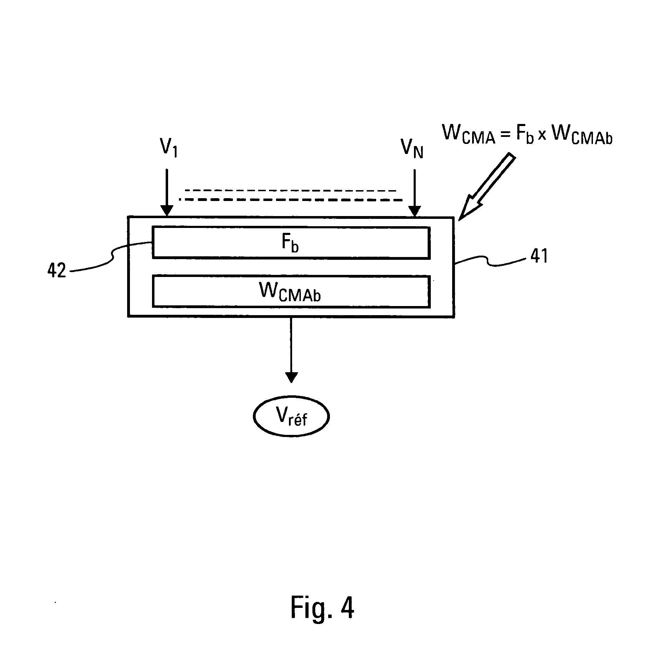

On s'intéresse à présent à la figure 4, qui illustre le principe mis en oeuvre pour réaliser l'étape 15 du procédé selon l'invention, étape de régénération d'un signal de référence.

Afin d'obtenir le signal de référence permettant d'effectuer l'intégration cohérente et de faciliter les étapes d'extraction et d'épuration doppler/distance du traitement non cohérent, le procédé selon l'invention met en oeuvre, comme il a été dit précédemment, une étape dite " étape de régénération d'un signal de référence" qui a pour but d'obtenir un signal de référence qui soit le plus possible semblable au signal émis par la source. Ce signal doit être débarrassé, comme le signal vcible, des signaux issus des trajets multiples et des autres sources potentielles de nuisance.

Une des caractéristiques du traitement de régénération d'un signal de référence est qu'il doit discriminer, de façon aveugle, le signal de référence des autres signaux.

La méthode utilisée par le procédé selon l'invention pour réaliser cette discrimination aveugle utilise la propriété de module constant des signaux

FM pour trouver un jeu de pondérations purement spatiales qui, appliqué aux signaux reçus sur l'antenne, donne en sortie l'estimation du signal de référence.

Les algorithmes de la famille connue sous l'acronyme CMA de la dénomination anglo-saxonne « Constant Modulus Algorithm » permettent de réaliser l'égalisation aveugle de signaux de module constant.

Dans une forme de mise en oeuvre préférée, le procédé selon l'invention utilise une variante d'algorithme CMA connue sous l'acronyme LS-CMA de la dénomination anglo-saxonne "Least Square Constant Modulus algorithm". Celle-ci offre en effet un bon compromis entre performances et charge de calcul. La figure 4 illustre le principe de fonctionnement de cet algorithme.

L'algorithme LS-CMA est un algorithme itératif par bloc pour lequel les pondérations appliquées aux signaux d'entrée $v_1$ à $v_N$ sont calculées par itérations successives sur un même bloc de données. Il a pour l'objet de déterminer le vecteur $v_{ref}$ et le vecteur $W_{CMA}$ solutions du problème des moindres carrés, formulé par la relation suivante :

$$\text{argmin }_{Wcma,Vréf} = \| w_{CMA}^H \cdot v - v_{réf} \|^2 \qquad [24]$$

dans laquelle $v$, $v_{réf}$ et $W_{CMA}$ ont respectivement pour expressions:

$$v = \begin{vmatrix} v_1(1) & \cdots & v_1(M) \\ \vdots & & \vdots \\ v_N(1) & \cdots & v_N(M) \end{vmatrix},$$

$$v_{réf} = \begin{vmatrix} v_{réf}(1) & \cdots & v_{réf}(M) \end{vmatrix}$$

$$w_{CMA} = \begin{vmatrix} w_{1CMA} \\ \vdots \\ w_{NCMA} \end{vmatrix}$$

$v$ est la matrice des signaux reçus $v_i(k)$ sur les N voies réception sur la durée de l'intégration cohérente.

$W_{CMA}$ est le vecteur des pondérations CMA permettant de reconstituer le signal de référence ayant un module constant,

Le signal $v_{ref}$ est quant à lui le signal de module constant qui représente l'estimation du signal de référence. C'est le signal de référence dit "régénéré".

Une particularité du procédé de traitement selon l'invention est qu'il doit être en mesure de prendre en compte la forte dynamique des signaux traités, le signal de référence pouvant être reçu avec un niveau supérieur de 70dB à celui du bruit. Cette dynamique importante peut occasionner des difficultés d'implémentation des calculs numériques correspondants.

Pour prendre en compte cette particularité des signaux traités, l'étape 15 du procédé fait, comme l'illustre la figure 4, débuter l'opération 41 d'évaluation proprement dite des pondérations $W_{CMA}$, telle qu'elle est prévue par l'algorithme CMA, par une opération 42 dite de "blanchiment de l'espace signal" et de réduction de dimension.

L'opération de blanchiment de l'espace signal débute par le calcul de la matrice de covariance $R_v$ des signaux capteurs définie par la relation suivante:

$$R_v = \frac{1}{M} \cdot v \cdot v^H \qquad [25]$$

La matrice $R_v$ (définie positive) est ensuite diagonalisée dans une base orthonormée selon :

$$R_v = \ddot{U}_V \, D_V \, U_V{}^H,$$

où les valeurs propres de $R_v$ sont classées par ordre décroissant sur la diagonale de $D_V$.

Les matrices $D_V$ et $U_V$, sont ensuite respectivement utilisées pour construire les matrices $D_{Vred}$ et $U_{Vred}$, matrices extraites de $D_V$ et $U_V$ en ne conservant que les valeurs propres de ces matrices, et les vecteurs propres associés, dont la dynamique par rapport à la plus grande valeur propre de $D_V$ est inférieure à environ 50dB (opération dite de réduction de dimension). Le filtre blanchissant $F_b$ appliqué sur les données d'entrée $v_i(k)$ est alors déduit de $D_{Vred}$ et $U_{Vred}$ par la relation:

$$F_b = U_{Vred} \cdot D_{Vred}{}^{-1/2} \qquad [26]$$

Par suite les données d'entrée blanchies $V_{bi}(k)$ sont obtenues à partir des données d'entrée $v_i(k)$ en utilisant la relation suivante:

$$V_b = F_b{}^H \cdot V \qquad [27]$$

Ces données blanchies constituent selon l'invention les données d'entrée de l'algorithme itératif LS-CMA.

Dans un premier temps, le vecteur des pondérations $W_{CMAb}$ dans l'espace des signaux blanchis est initialisé à une valeur $w_{CMAb\_init}$. Si le signal de référence est le plus puissant, on peut utiliser la valeur donnée ci-après:

$$W_{CMAb} = W_{CMAb\_init} = \begin{vmatrix} 1 \\ 0 \\ \vdots \\ 0 \end{vmatrix}$$

Puis, à chaque itération de l'algorithme, une nouvelle valeur de $W_{CMAb}$ est calculée suivant l'algorithme décrit ci-dessous :

- On forme le vecteur Y des signaux obtenus en sortie de formation de voie avec la valeur de $W_{CMAb}$ obtenue à l'itération précédente. Y a pour expression:

$$Y = W_{CMAb}{}^H \cdot V_b \qquad [28]$$

- On déduit de Y le vecteur $Y_{mod\_cst}$, associé à un signal de module constant. $Y_{mod\_cst}$ est un vecteur dont les composantes sont obtenues en divisant chaque composante de Y par son module:

$$Y_{mod\_cst} = [\, Y_i / |Y_i| \,]_i \qquad [29]$$

- Les composantes du vecteur pondération $W_{CMAb}$ sont mises à jour à partir de $Y_{mod\_cst}$ en effectuant l'opération suivante:

$$W_{CMAb} = ( Y_{mod\_cst} \cdot pinv(V_b) )^H \qquad\qquad [30]$$

où pinv désigne l'inverse de Moore-Penrose.

Par suite, après quelques itérations (de l'ordre de 5 à 10), on déduit la valeur des composantes du vecteur pondération $W_{CMA}$ recherché de celles du vecteur $W_{CMAb}$ en appliquant la relation:

$$W_{CMA} = F_b \cdot W_{CMAb} \qquad\qquad [31]$$

Le vecteur représentant le signal de référence 43 est alors obtenu en appliquant les coefficients de pondération au signal d'entrée 44.

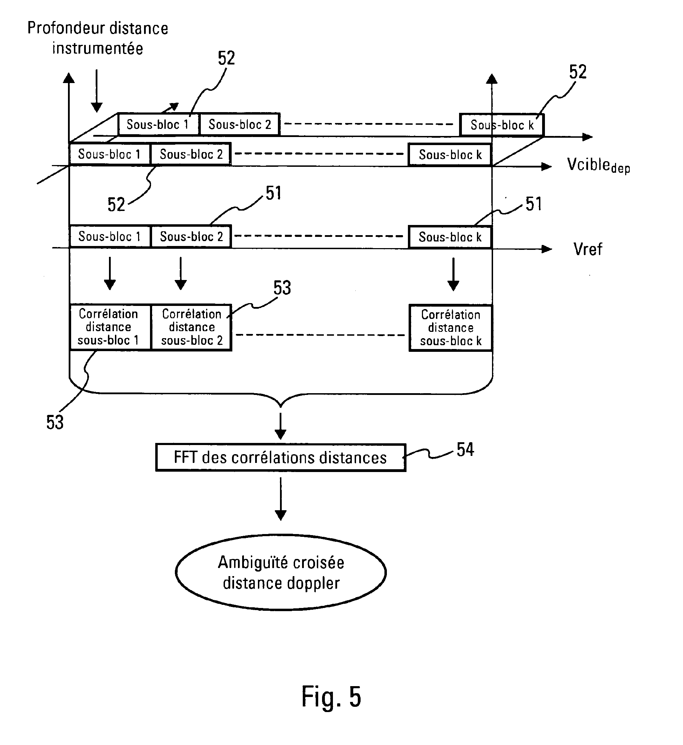

On s'intéresse à présent à la figure 5 qui illustre de manière schématique le principe de fonctionnement de l'opération effectuée lors de l'étape 14 du procédé selon l'invention, étape dite "de calcul des ambiguïtés croisées signal de référence/voies cibles dépolluées" qui réalise l'intégration cohérente proprement dite des signaux rétro-diffusés par les objets observés, ou cibles. L'objet de cette étape est de réaliser une analyse du signal reçu sur l'axe distance et sur l'axe doppler, au travers de cellules distance-doppler (m,n) de taille définie et sur un domaine distance-doppler également défini.

Si l'on considère dans un premier temps, le nombre M d'échantillons temporels intégrés en cohérence, le nombre maximum D de décalages distance testés, le signal de référence $v_{réf}[k]$ obtenu par l'étape 15 du procédé pour $0 \le k \le M-1$ et le signal cible dépollué $v_{cibledep}[k]$ obtenu par l'étape 13 pour $0 \le k \le M-1+D$, les signaux réfléchis par les cibles étant par ailleurs considérés comme des versions retardées et dopplérisées, c'est à dire affectées d'un décalage fréquentiel dû aux mouvements de la cible, du signal de référence, l'intégration cohérente réalisée par le procédé selon l'invention consiste à calculer la quantité amb(m,n), appelée ambiguïté croisée. Cette quantité est donnée par la relation suivante :

$$amb(m,n) = \sum_{k=0}^{M-1} v_{réf}[k] v_{cibledep}^{*}[k+m] e^{\frac{j2\pi nk}{M}} \qquad\qquad [32]$$

où $V_{cibledép}^{*}[k]$ correspond au conjugué de $V_{cibledép}[k]$, et où le paramètre m, compris entre 0 et D, caractérise le retard du signal cible par rapport au signal de référence et le paramètre n, compris entre 0 et M-1, caractérise la fréquence doppler bistatique de la cible.

Le calcul de la fonction amb(m,n) peut naturellement être réalisé de façon directe en calculant, pour chaque valeur de k et de m, les produits du type $v_{réf}[k] v_{cibledép}^{*}[k+m]$, puis en évaluant les FFT des signaux temporels ainsi obtenus pour chaque valeur de m. Cependant la charge de calcul résultant d'un tel calcul est généralement excessive. C'est pourquoi dans le procédé selon l'invention on utilise une méthode de calcul rapide indirecte qui induit avantageusement une charge de calcul plus faible. Le principe de cette méthode est décrit dans la suite de la description.

Le principe de la méthode décrite ici repose sur le fait que la vitesse des cibles à traiter n'excédant pas 2 à 3 fois la vitesse du son, la fréquence doppler maximale à instrumenter, $f_{dmax}$, est très inférieure à la fréquence doppler ambiguë pour une fréquence d'échantillonnage de l'ordre de 150kHz. Ainsi, par exemple, pour un radar passif fonctionnant dans la bande FM grand public, c'est à dire à une fréquence voisine de f = 100 MHz, $f_{dmax}$ a pour valeur:

$$F_{dmax} = \frac{2v_{max}}{\lambda} \approx \frac{2 \cdot 1000}{3} \approx 667 \, Hz \, .$$

Par suite il est possible négliger la variation de la phase doppler du signal reçu sur des sous-blocs de quelques dizaines d'échantillons successifs.

Ainsi, la variation de phase doppler des signaux reçus pouvant être négligée sur quelques dizaines d'échantillons consécutifs, il est possible d'estimer l'ambiguïté croisée en effectuant des calculs de corrélation uniquement sur l'axe distance sur des sous-blocs de L échantillons, puis en calculant la FFT de ces corrélations en distance. Le calcul des corrélations distances peut en outre être effectué dans le domaine spectral, ce qui a pour effet de diminuer sensiblement la charge de calcul. C'est sur ces principes qu'est basé le traitement réalisé.

Selon cette forme de mise en oeuvre préférée, le calcul des ambiguïtés croisées s'effectue en deux étapes.

La première étape consiste à calculer, sur des sous-blocs 51 et 52 de L échantillons du signal de référence régénéré et du signal cible dépollué, les corrélations distance élémentaires cdist(m,s) 53 définies par la relation suivante :

$$\text{cdist}(m,s) = \sum_{k=sL}^{(s+1)L-1} v_{\text{réf}}[k] v_{\text{cibledep}}{}^{*}[k+m] \qquad [33]$$

avec:

$0 \le m \le D,$

$0 \le s \le M/L\text{-}1$, L prenant ici une valeur entière divisant M.

Afin de réduire la charge de calcul, le calcul des corrélations distance élémentaires cdist(m,s) est effectué dans le domaine spectral, et non directement.

De la sorte, si l'on considère par exemple le cas ou s est égal à 0, le calcul des corrélations distances élémentaires cdist(m,s) est réalisé à partir de la relation:

$$\text{cdist}[m] = \sum_{k=0}^{L-1} v_{\text{réf}}[k] v_{\text{cibledep}}{}^{*}[k+m], \text{ avec } 0 \le m \le D, \qquad [34]$$

Le calcul de cdist(m) dans le domaine spectral peut alors être décrit comme suit.

Soit $L_2$ la plus petite puissance de 2 supérieure ou égale à L+2D. On construit par "zéro padding" à partir de $v_{\text{réf}}[k]$ (pour $0 \le k \le L\text{-}1$), le signal $v_{\text{réfpad}}[k]$ (pour $0 \le k \le L_2\text{-}1$). On construit également, toujours par "zéro padding", à partir de $v_{\text{cibledep}}[k]$ (pour $0 \le k \le L\text{-}1+D$), le signal $v_{\text{cibledeppad}}[k]$ (pour $0 \le k \le L_2\text{-}1$).

On calcule ensuite les grandeurs $Vf_{\text{refpad}}$ et $Vf_{\text{cibledep}}$ en appliquant respectivement sur les signaux $v_{\text{réfpad}}$ et $v_{\text{cibledeppad}}$ des FFT sur $L_2$ points.

A partir de $Vf_{\text{refpad}}$ et $Vf_{\text{cibledep}}$, on calcule enfin le signal p[k] défini pour $0 \le k \le L_2\text{-}1$ par la relation suivante:

$$p = \text{FFT}^{-1}(Vf_{\text{réfpad}} \ Vf_{\text{cibledep}}{}^{*}), \qquad [35]$$

De la sorte, cdist(m) est obtenu par la relation suivante:

$$\begin{aligned}\text{cdist}[m] &= p(0) &&\text{pour } m = 0, \\ &= p(L_2 - m) &&\text{pour } 1 \le m \le D\end{aligned} \qquad [36]$$

La seconde étape 54 consiste, quant à elle, à déduire des corrélations distance élémentaires cdist(m,s) ainsi calculées, les valeurs d'ambiguïtés croisées amb(m,n) en appliquant la relation suivante:

$$\text{amb}(m,\text{-}n) = \text{FFT}_s(\text{cdist}_{\text{pad}}(m,s))_{s=\text{-}n} \qquad [37]$$

avec:

- $0 \le m \le D,$
- $0 \le n \le M_{L,2}\text{-}1$, $M_{L,2}$ représentant la plus petite puissance de 2 supérieure où égale à M/L

Dans la relation [37], FFT$_s$ désigne un calcul de FFT par rapport à la variable s et cdist$_{pad}$(m,s) représente la grandeur déduite de cdist(m,s) par une opération de "zéro-padding" réalisée par rapport à la plus petite puissance de 2 supérieure où égale à M/L, notée M$_{L,2}$.

A l'issue de ces deux étapes de calcul, on obtient ainsi les ambiguïtés croisées calculées pour chaque couple de valeurs (m,n) du domaine distance/doppler d'intérêt.

On s'intéresse à présent à l'étape 19 de calcul de l'auto-ambiguïté du signal de référence. La connaissance de l'auto-ambiguïté du signal de référence obtenu à l'issue de l'étape 15 est nécessaire à la mise en oeuvre des étapes 111 et 112, de Calcul de la Bande à 3dB du signal de Référence et d'Epuration doppler/distance, du traitement incohérent.

Par analogie avec l'ambiguïté croisée signal de référence / voie cible dépolluée (cf. relation [1]), l'auto-ambiguïté du signal de référence est définie par la relation suivante:

$$\text{autoamb}(m,n) = \sum_{k=0}^{M-1} v_{\text{réf}}[k]v_{cref}^*[k+m]e^{\frac{j2\pi nk}{M}} \qquad [38]$$

où:

- M représente le nombre d'échantillons temporels intégrés en cohérence,
- D représente le nombre maximum de décalages distances testés pour la détection de cibles,
- $v_{\text{réf}}[k]$, le signal de référence mesuré pour $0 \leq k \leq M - 1$,
- $v_{\text{créf}}[k]$, le signal de référence mesuré augmenté des D cases distances précédentes et suivantes. $-D \leq k \leq M-1+D$,

Le paramètre m, compris entre -D et D, représente un retard positif ou négatif, et le paramètre n, compris entre 0 et M-1, représente la fréquence doppler bistatique.

Comme dans le cas de l'ambiguïté croisée, le calcul direct de autoamb(m,n) conduit généralement à une charge de calcul importante, voire prohibitive. C'est pourquoi dans le procédé selon l'invention, ce calcul est réalisé par une méthode alternative analogue à celle retenue pour le calcul des ambiguïtés croisées. Cette méthode qui consiste dans une première étape à calculer, dans le domaine spectral, des auto-corrélations "purement distances" sur des sous-blocs de L échantillons, puis, dans une seconde étape, à en évaluer les FFT, est décrite ci-après.

La première étape consiste à calculer, sur des sous-blocs de L échantillons, des auto-corrélations distances élémentaires acdist(m,s) définis par la relation suivante :

$$\text{acdist}(m,s) = \sum_{k=sL}^{(s+1)L-1} v_{\text{réf}}[k]v_{\text{créf}}^*[k+m] \qquad [39]$$

dans laquelle m représente un entier tel que $-D \leq m \leq D$ et s un entier tel que $0 \leq s \leq M/L-1$, L représentant quant à lui un entier divisant M.

La seconde étape consiste à calculer, à partir des auto-corrélations distances élémentaires acdist(m,s), les valeurs des auto-ambiguïtés autoamb(m,n) définies par :

$$\text{auto-amb}(m,-n) = \text{FFT}_s(\text{acdist}_{pad}(m,s))_{s=-n}$$

où acdist$_{pad}$(m,s) représente le signal déduit de acdist(m,s) par "zéro-padding" par rapport à la plus petite puissance de 2 supérieure où égale à M/L, notée M$_{L,2}$ et où FFT$_s$ désigne un calcul de FFT par rapport à la variable s.

Le paramètre m, est ici compris entre -D et D, et le paramètre n entre 0 et M$_{L,2}$-1.

Pour réduire la charge de calcul, le calcul des auto-corrélations distances élémentaires acdist(m,s) est effectué, comme le calcul des corrélations élémentaires cdist(m,s) intervenant lors de l'étape 14, dans le domaine spectral, et non de manière directe. Le calcul des auto-corrélations distances élémentaires acdist(m,s) dans le domaine spectral est décrit ci-dessous pour une valeur nulle de s afin d'alléger les notations. On a alors:

$$acdist[m] = \sum_{k=0}^{L-1} v_{r\acute{e}f}[k]v_{cr\acute{e}f}^{*}[k+m] \qquad\qquad [40]$$

avec $-D \le m \le D$,

Soit $L_2$ la plus petite puissance de 2 supérieure ou égale à $L+4D$. On construit par "zéro padding", à partir de $v_{r\acute{e}f}[k]$ défini pour $0 \le k \le L-1$, le signal $V_{r\acute{e}fpad}[k]$ défini pour $0 \le k \le L_2-1$.

On construit de même par décalage de D échantillons et "zéro padding", à partir de $v_{cr\acute{e}f}[k]$ défini pour $-D \le k \le L-1+D$, le signal $v_{cr\acute{e}fpad}[k]$ défini pour $0 \le k \le L_2-1$.

On calcule ensuite les grandeurs $Vf_{r\acute{e}fpad}$ et $Vf_{cr\acute{e}fpad}$ en appliquant respectivement sur les signaux $v_{r\acute{e}fpad}$ et $v_{cr\acute{e}fpad}$ des FFT sur $L_2$ points.

A partir de $Vf_{r\acute{e}fpad}$ et $Vf_{cr\acute{e}fpad}$, on calcule le signal $p[k]$ défini pour $0 \le k \le L_2-1$ par la relation:

$$p = FFT^{-1}(Vf_{r\acute{e}fpad}\ Vf_{cr\acute{e}fpad}^{*}) \qquad\qquad [41]$$

De la sorte, acdist(m) est obtenu par la relation suivante:

$$acdist[m] = p(0) \qquad\quad \text{pour } m = -D,$$
$$= p(L_2 - (m+D)) \quad \text{pour } -D+1 \le m \le D$$
$$[42]$$

L'autoambiguïté autoamb(m,n) du signal de référence ainsi déterminée pour chaque case distance doppler est utilisée lors des étapes de calcul de la bande à 3dB du signal de référence (111) et d'épuration doppler/distance(112).

On s'intéresse dans un second temps au traitement non-cohérent 12 et plus particulièrement aux étapes suivantes:

- Calcul de la bande à 3dB du signal de référence (étape 111)
- Extraction doppler-distance (étape 18)
- Epuration doppler-distance (étape 112),

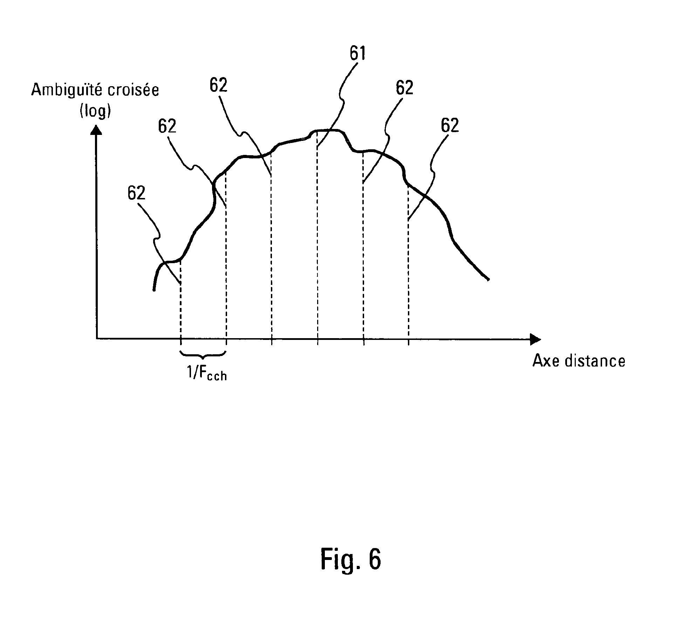

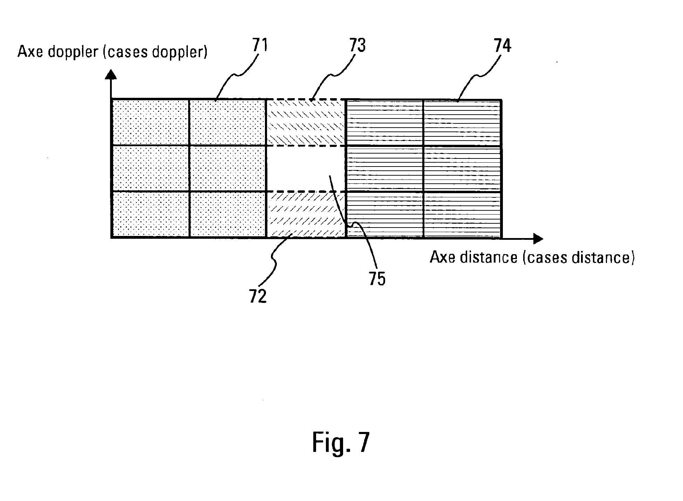

S'agissant des étapes caractéristiques du traitement non cohérent, on s'intéresse d'abord aux figures 6 et 7 qui illustrent le principe de fonctionnement de l'étape 18 d'extraction distance-doppler.

L'étape d'extraction distance-doppler est appliquée aux informations de "présence écho", ou PE, obtenues de manière connue à partir des échantillons du signal d'ambiguïté croisé calculé par le traitement cohérent et de l'estimation d'ambiance associée à chaque échantillon en appliquant à ces échantillons une opération de normalisation et de détection de type TFAC connue par ailleurs et non décrite ici. Durant cette opération le niveau de signal correspondant à chaque échantillon, ou case distance-doppler, est normalisé par le niveau ambiant qui lui est associé puis comparé, à un seuil fixé. Par suite, chaque case distance-doppler dont le niveau normalisé dépasse le seuil est détectée et marquée comme représentant une présence écho ou PE.

Cependant, comme l'illustre la figure 6 pour l'axe distance, il est connu qu'une cible dont la fonction d'ambiguïté est centrée sur une case donnée peut donner lieu à la détection de plusieurs PE, une détection 61 dans la case distance-doppler dans laquelle se situe réellement à la cible et d'autres détections 62 dans les cases distance-doppler adjacentes à la case distance-doppler dans laquelle se situe la cible. Ceci est du au fait que le lobe principal de la fonction d'ambiguïté croisée a une certaine largeur, fonction de la bande à 3dB du signal de référence, et présente des flancs dont la raideur est finie.

Pour traiter ce phénomène de création de PE multiples à partir d'une cible unique il est connu de mettre en oeuvre, après détection des PE, une opération d'extraction doppler/distance dont l'objet est de créer une unique détection, appelée plot, à partir des PE adjacentes provenant vraisemblablement d'une même cible. Cependant dans le contexte particulier d'un radar passif FM cette opération présente un certain nombre de caractéristiques spécifiques.

La méthode d'extraction mise en oeuvre selon l'invention consiste à ne retenir qu'une seul PE par cible en ne conservant parmi l'ensemble des PE obtenues que les PE correspondant à des maxima locaux des ambiguïtés croisées sur les axes distance et doppler. Or, le rapport fréquence d'échantillonnage sur largeur de bande à 3dB des signaux FM, rapport qui fixe en particulier l'extension distance, en nombre de cases, du lobe principal de l'auto-ambiguïté, fluctue dans le temps, de sorte que le nombre de cases distances prises en compte pour le test de maximum local doit être ajusté dynamiquement à la valeur de ce paramètre.

C'est pourquoi l'extraction doppler-distance consiste ici à créer un plot à partir d'une détection dans une case distance-doppler $(n_{dop}, n_{dist})$, si le module logarithmique de son ambiguïté croisée, $logmod(n_{dop}, n_{dist})$, vérifie la relation suivante:

$$logmod(n_{dop}, n_{dist}) > logmod(n_{dop} + i, n_{dist} + j) \qquad [43]$$

pour caque case distance-doppler $(n_{dop}+i, n_{dist}+j)$ appartenant, comme l'illustre la figure 7 à un voisinage E, formé de la réunion des groupes de cases distance-doppler 71 à 74 environnant la case 75 considérée et défini par:

$$E = \{[n_{dop} - 1, n_{dop} + 1] \times [n_{dist} - n_{ssechdist}, n_{dist} - 1]\}$$
$$\cup \{n_{dop} - 1, n_{dist}\} \cup \{n_{dop} + 1, n_{dist}\} \qquad [44]$$
$$\cup \{[n_{dop} - 1, n_{dop} + 1] \times [n_{dist} + 1, n_{dist} + n_{ssechdist}]\}$$

où $n_{s\,sec\,hdist}$ représente l'entier le plus proche (EPP) du rapport $\left(\dfrac{F_{ech}}{B_{3dB}}\right)$, $B_{3dB}$ représentant l'estimation de la bande passante à 3dB du signal FM reçu pour la rafale courante.

Comme on peut le constater dans ce qui précède, l'étape 18 d'extraction selon l'invention nécessite pour être réalisée, de connaître la valeur $B_{3dB}$ de la bande du signal à 3dB. Le procédé selon l'invention détermine cette bande $B_{3dB}$ en mettant en oeuvre sur le signal de référence régénéré une étape 111 de calcul.

Selon l'invention, la bande à 3dB du signal de référence est déduite de la fonction d'auto-ambiguïté du signal de référence regenéré, en appliquant la méthode décrite ci-après :

La coupe selon l'axe distance de la fonction d'auto-ambiguïté est approximable en échelle linéaire et autour de la distance nulle, par une gaussienne. Il en résulte, qu'en échelle logarithmique, la coupe distance est assimilable à une parabole:

$$Auto\text{-}amb\text{-}dist\text{-}log(d) = a\,d^2 + b\,d + c \qquad [45]$$

où:

- Auto-amb-dist-log(d) est le module logarithmique de la coupe distance de la fonction d'auto-ambiguïté, d caractérisant la variable distance,
- a, b et c désignent les coefficients de la parabole modélisant la coupe distance en échelle logarithmique.

La coupe distance de la fonction d'auto-ambiguïté étant maximale à distance nulle, le coefficient b est nul.

La largeur du lobe de la coupe distance de la fonction d'auto-ambiguïté en échelle logarithmique ne dépend pas du coefficient c (qui fixe la valeur de la fonction d'auto-ambiguïté à distance nulle), mais uniquement du coefficient a. La valeur du coefficient a peut être estimée, à partir de la fonction d'auto-ambiguïté du signal de référence calculée à l'étape (19) par la méthode décrite ci-après, ou tout autre algorithme d'approximation parabolique.

Soit $auto\_amb\_log(m,n) = 20*log10 |auto\_amb(m,n)|$ le module logarithmique de la fonction d'auto-ambiguïté calculée à l'étape (19).

$$a = \frac{\sum_{i=-2}^{2} i^2 (auto\_amb\_log(i,0) - auto\_amb\_log(0,0))}{\sum_{i=-2}^{2} i^4} \qquad [46]$$

L'auto-corrélation du signal de référence en échelle linéaire étant supposée gaussienne, la DSP du signal de référence est également gaussienne. Sa bande à 3dB peut se déduire de a, par :

$$B_{3dB} = \frac{\sqrt{2\ln(2)}}{\pi \sqrt{-10 \dfrac{\log_{10}(e)}{a f_{ech}^2}}} \qquad [47]$$

où $f_{ech}$ désigne la fréquence d'échantillonnage.

La valeur $B_{3dB}$ de la bande à 3dB ainsi obtenue à l'issue de l'étape 111 est utilisé lors de l'étape 18 pour le calcul de $n_{s\,sec\,hdist}$.

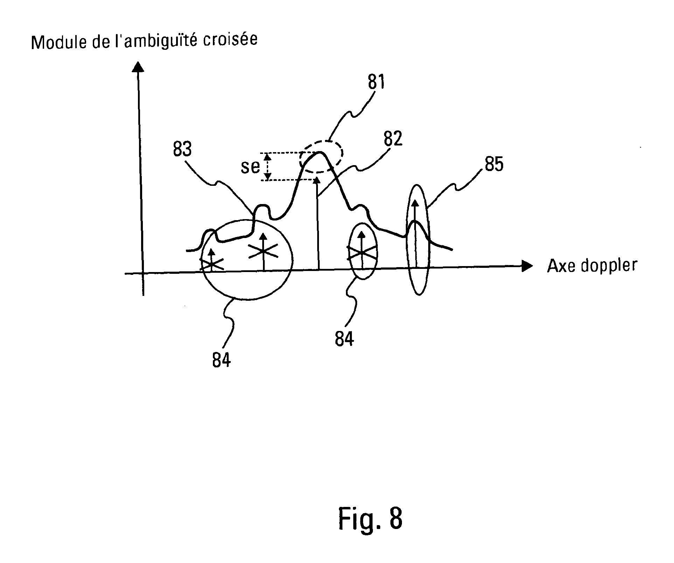

On s'intéresse à présent à la figure 8 qui illustre le principe de fonctionnement de l'étape 112 d'épuration doppler-distance selon l'invention.

Cette étape a pour objet d'éliminer les plots parasites correspondant aux lobes secondaires en distance/doppler de cibles de fort niveau.

En effet le signal de référence de nature FM présente en distance et en doppler des lobes secondaires de niveau élevé et relativement éloignés du lobe principal. Ces lobes secondaires peuvent créer, lors de l'étape 17 de Normalisation et de Recherche de Détections, des présences écho (PE) qui ne sont pas éliminées par l'étape 18 d'extraction doppler-distance qui analyse chaque PE au travers de son environnement proche.

Pour réaliser cette opération d'épuration doppler-distance, le procédé selon l'invention utilise le signal d'auto-ambiguité distance-doppler du signal régénéré

Selon l'invention les plots extraits sont classés par ordre de niveau décroissant. Le traitement consiste alors à translater la fonction d'autoambiguité du signal de référence en distance et en doppler de façon à ce que son origine 81 coïncide avec la case distance-doppler du plot 82 considéré. Le niveau de la fonction d'autoambiguité est alors ajusté à partir du niveau du plot traité de façon à dépasser ce niveau d'une valeur appelée seuil de surélévation. La fonction ainsi réalisée constitue le gabarit d'épuration 83 utilisé.

Par suite tous les plots 84 - à l'exception du plot courant 82 et des plots situés dans son voisinage proche - dont l'amplitude est inférieure au gabarit d'épuration sont considérés comme provenant de lobes secondaires en doppler ou en distance et sont supprimés. Les plots tels que le plot 85, dont l'amplitude est supérieure au gabarit d'épuration sont, quant à eux conservés.

Il est à noter que l'illustration de la figure 8 constitue une représentation simplifiée à deux dimensions dans laquelle tous les plots traités sont situés dans la même case distance. Cette représentation simplifiée pour des raisons de clarté permet néanmoins d'illustrer de manière claire le principe de fonctionnement de l'étape d'épuration.

A l'issue de cette étape d'épuration les plots restants sont utilisés pour les étapes ultérieures de traitement.

## Revendications

1. Procédé de traitements du signal reçu par un radar passif FM comportant une pluralité de voies de réception (V1, ..., VN), le procédé comportant une phase de traitement cohérent (11) réalisant un re-conditionnement des signaux reçus puis une phase de traitement non cohérent (12) réalisant la constitution de plots à partir des signaux re-conditionnés puis la détermination des attributs associés aux plots constitués, **caractérisé en ce que** le traitement cohérent comporte:

    - une étape (13) de formation de voies cibles dépolluées à partir des voies de réception, durant laquelle on réduit, sur les voies cibles formées, la puissance des signaux provenant de sources de nuisances susceptibles de limiter la sensibilité du radar;

- une étape (15) de régénération d'un signal de référence à partir des voies de réception formées;
- une étape (14) de calcul des ambiguïtés croisées entre voies cibles dépolluées et signal de référence régénéré;
- une étape (19) de calcul de l'auto-ambiguïté du signal de référence régénéré.

**2.** Procédé selon la revendication 1, **caractérisé en ce que** le traitement non cohérent comporte en outre:

- une étape (18) d'extraction distance-doppler appliquée aux plots constitués, avant détermination des attributs associés à ces plots,
- une étape (112) d'épuration doppler-distance appliquée aux plots constitués après extraction distance-doppler et réalisée au moyen du signal résultant de l'étape (19) de calcul de l'auto-ambiguïté du signal de référence régénéré,
la détermination des attributs des plots étant réalisée à partir des plots obtenus après l'étape (112) d'épuration doppler-distance.

**3.** Procédé selon la revendication 2, **caractérisé en ce que** l'étape (18) d'extraction distance-doppler utilise le calcul de la bande à -3dB du signal de référence régénéré.

**4.** Procédé selon la revendication 3, **caractérisé en ce que** la bande à -3dB du signal de référence régénéré est estimée à partir du signal résultant de l'étape (19) de calcul de l'auto ambiguïté du signal de référence régénéré.

**5.** Procédé selon l'une quelconque des revendications précédentes, **caractérisé en ce que** le traitement non cohérent comporte en outre:

- une étape (113) de mesures d'écartométrie en distance,
- une étape (114) de mesures d'écartométrie en azimut,
ces deux étapes étant appliquées aux plots constitués à l'issue de l'étape (112) d'épuration doppler-distance.

**6.** Procédé selon la revendication 5, **caractérisé en ce qu'**il comporte en outre, une étape (115) d'épuration en azimut et une étape (116) de limitation du nombre de plots transmis.

**Claims**

**1.** A method for processing signals received by a passive FM radar including a plurality of receiving paths (V1, ..., VN), the process including a coherent processing phase (11) for reconditioning the received signals followed by a non-coherent processing phase (12) for constituting blips from the reconditioned signals then determining the attributes associated with the constituted blips, **characterised in that** the coherent processing includes:

- a step (13) of forming clean target paths from the receiving paths, during which, in the formed target paths, the power of the signals originating from interference sources liable to limit the sensitivity of the radar is reduced;
- a step (15) of forming a reference signal from the formed receiving paths;
- a step (14) of calculating the cross-ambiguities between clean target paths and the regenerated reference signal;
- a step (19) of calculating the auto-ambiguity of the regenerated reference signal.

**2.** The method according to claim 1, **characterised in that** the non-coherent processing further comprises:

- a step (18) of Doppler-distance extraction, applied to the constituted blips before determining the attributes associated with these blips;
- a step (112) of Doppler-distance purification, applied to the blips constituted after Doppler-distance extraction and achieved by means of the signal resulting from the step (19) of calculating the auto-ambiguity of the regenerated reference signal,
wherein the determination of the attributes of the blips is realised from the blips obtained after the step (112) of Doppler-distance purification.

**3.** The method according to claim 2, **characterised in that** the step (18) of Doppler- distance extraction uses a calculation of the 3dB bandwidth of the regenerated reference signal.

**4.** The method according to claim 3, **characterised in that** the 3dB bandwidth of the regenerated reference signal is estimated from the signal resulting from step (19) for calculating the auto-ambiguity of the regenerated reference signal.

**5.** The method according to any one of the previous claims, **characterised in that** the non-coherent processing further includes:

- a step (113) of deviation measurements in terms of distance;
- a step (114) of deviation measurements in terms of Azimuth;
these two steps being applied to the blips constituted from the step (112) of Doppler-distance purification.

**6.** The method according to claim 5, **characterised in that** it further comprises a step (115) of Azimuth purification and a step (116) of limiting the number of blips transmitted.

**Patentansprüche**

**1.** Verfahren zum Verarbeiten eines von einem Passivradar FM mit mehreren Empfangskanälen (V1, ..., VN) empfangenen Signals, wobei das Verfahren eine kohärente Verarbeitungsphase (11) zum Rekonditionieren der empfangenen Signale und dann eine nichtkohärente Verarbeitungsphase (12) beinhaltet, in der Echozeichen von den rekonditionierten Signalen erzeugt und dann die mit den gebildeten Echozeichen assoziierten Attibute bestimmt werden, **dadurch gekennzeichnet, dass** die kohärente Verarbeitung Folgendes beinhaltet:

- einen Schritt (13) des Bildens von gereinigten Zielkanälen von den Empfangskanälen, bei dem die Leistung von Signalen, die von Störquellen kommen, die dazu neigen, die Empfindlichkeit des Radars zu begrenzen, auf den gebildeten Zielkanälen reduziert wird;
- einen Schritt (15) des Regenerierens eines Referenzsignals von den gebildeten Empfangskanälen;
- einen Schritt (14) des Berechnens von Querambiguitäten zwischen gereinigten Zielkanälen und dem regenerierten Referenzsignal;
- einen Schritt (19) des Berechnens der Autoambiguität des regenerierten Referenzsignals.

**2.** Verfahren nach Anspruch 1, **dadurch gekennzeichnet, dass** die nichtkohärente Verarbeitung darüber hinaus Folgendes beinhaltet:

- einen Schritt (18) des Extrahierens einer Doppler-Distanz, der vor dem Bestimmen der mit den gebildeten Echozeichen auf diese angewendet wird,
- einen Schritt (112) des Bereinigens einer Doppler-Distanz, der nach dem Extrahieren der Doppler-Distanz auf die Echozeichen angewendet und mit Hilfe des Signals ausgeführt wird, das aus dem Schritt (19) des Berechnens der Autoambiguität des regenerierten Referenzsignals resultiert,
wobei das Bestimmen der Attribute der Echozeichen von den Echozeichen ausgeführt wird, die nach dem Schritt (112) des Bereinigens der Doppler-Distanz erhalten werden.

**3.** Verfahren nach Anspruch 2, **dadurch gekennzeichnet, dass** der Schritt (18) der Doppler-Distanz extraktion das Berechnen die 3dB bandbreite des regenerierten Referenzsignals nutzt.

**4.** Verfahren nach Anspruch 3, **dadurch gekennzeichnet, dass** die 3dB bandbreite des regenerierten Referenzsignals von dem Signal geschätzt wird, das aus Schritt (19) des Berechnens der Autoambiguität des regenerierten Referenzsignals resultiert.

**5.** Verfahren nach einem der vorherigen Ansprüche, **dadurch gekennzeichnet, dass** die nichtkohärente Verarbeitung darüber hinaus Folgendes beinhaltet:

- einen Schritt (113) der Distanzabweichungsmessung,
- einen Schritt (114) der Azimuthabweichungsmessung,
wobei diese beiden Schritte auf die nach dem Schritt (12) des Bereinigens der Doppler-Distanz gebildeten Echozeichen angewendet werden.

**6.** Verfahren nach Anspruch 5, **dadurch gekennzeichnet, dass** es ferner einen Schritt (115) der Azimuthbereinigung und einen Schritt (116) des Begrenzens der Zahl der übertragenen Echozeichen beinhaltet.

Fig. 1

EP 2 100 161 B1

$V_1 \longleftrightarrow V_N$

$d^H$

23

21

$V_{cible}$

+

−

29

voie cible dépolluée

24

0

$Vopp_1$      $Vopp_2$      $Vopp_{N-1}$

27

| $h_1[-R_1]$ | $h_2[-R_2]$ | $h_{N-1}[-R_2]$ |
| $h_1[-R_1+1]$ | $h_2[-R_2+1]$ | $h_{N-1}[-R_2+1]$ |
| $h_1[+R_1]$ | $h_2[+R_2]$ | $h_{N-1}[+R_2]$ |

26

25

26

$\Sigma$

$Vopp_{tot}$

22

28

Fig. 2

24

$V_1 \longleftrightarrow V_N$

$0 = F \times B$

$d^H(\theta_{obs})$

23

Vcible

B

24

$b_1$ $b_2 \longleftrightarrow b_{N-1}$

F

$Vopp_1$ 31 $Vopp_2$ 32 $Vopp_{N-1}$

Fig. 3

$$V_1 \qquad\qquad V_N \qquad W_{CMA} = F_b \times W_{CMAb}$$

| $F_b$ |
| :---: |

42 —

41

| $W_{CMAb}$ |
| :---: |

$V_{réf}$

Fig. 4

Profondeur distance
instrumentée

Fig. 5

EP 2 100 161 B1

Fig. 6

28

Axe doppler (cases doppler)  71  73  74

Axe distance (cases distance)

75

72

## Fig. 7

Module de l'ambiguïté croisée

Fig. 8

## RÉFÉRENCES CITÉES DANS LA DESCRIPTION

**Documents brevets cités dans la description**

- FR 2882442